# EUROPEAN PATENT SPECIFICATION

(11) **EP 4 376 190 B1**
(45) Date of publication and mention of the grant of the patent: **29.07.2026**
(21) Application number: 23820094.3
(22) Date of filing: 07.06.2023
(51) Int. Cl.: H01M 50/242, H01M 50/291, H01M 50/264, H01M 50/209, H01M 50/105, H01M 10/647, H01M 10/625, H01M 10/613, H01M 10/04, H01M 50/244, H01M 50/249, H01M 50/211, H01M 50/289

(54) **BATTERY PACK AND VEHICLE INCLUDING SAME**
BATTERIEPACK UND FAHRZEUG DAMIT
BLOC-BATTERIE ET VÉHICULE LE COMPRENANT

(30) Priority: 10.06.2022 KR 20220070524; 24.05.2023 KR 20230067180
(43) Date of publication of application: 29.05.2024
(73) Proprietor: LG Energy Solution, Ltd., Seoul 07335 (KR)
(72) Inventor: CHUNG, Se-Yun, Daejeon 34122 (KR); JEONG, Jong-Ha, Daejeon 34122 (KR); KWON, Woo-Yong, Daejeon 34122 (KR); KIM, In-Soo, Daejeon 34122 (KR); PARK, Jin-Yong, Daejeon 34122 (KR); CHI, Ho-June, Daejeon 34122 (KR)
(74) Representative: Goddar, Heinz J.
(86) International application number: PCT/KR2023/007783
(87) International publication number: WO 2023/239158

(56) References cited:
- EP-A1- 4 372 887
- EP-A1- 4 386 949
- EP-A2- 3 998 671
- WO-A1-2023/020128
- CN-A- 113 809 461
- JP-A- 2011 255 705
- JP-A- 2022 042 851
- KR-A- 20140 061 212
- KR-A- 20210 016 825
- US-A1- 2019 326 569
- US-A1- 2020 411 819

## Description

### TECHNICAL FIELD

The present disclosure relates to a battery pack, and more particularly, to a battery pack configured to enable direct assembly of battery cells into a pack case while omitting the assembly in the unit of battery module when assembling the battery pack.

### BACKGROUND ART

Secondary batteries are attracting attention as a new energy source for improving eco-friendliness and energy efficiency since they notably reduce fossil fuel use and do not produce by-products from the use of energy.

Accordingly, the use of secondary batteries in various types of devices is increasing. For example, secondary batteries are being used as an energy source for not only small multifunctional products such as wireless mobile devices or wearable devices but also electric vehicles and hybrid electric vehicles proposed as an alternative to gasoline vehicles and diesel vehicles or energy storage systems (ESSs).

In general, secondary batteries have the operating voltage of about 2.5V to 4.5V per battery. Accordingly, electric vehicles or energy storage systems requiring large capacity and high output use as an energy source a battery module including secondary batteries connected in series and/or in parallel and received in a module housing and a battery pack including battery modules connected in series and/or in parallel. That is, the battery pack includes the battery module as its lower level concept, and the battery module includes the battery cell as its lower level concept. Additionally, the number of battery cells in a battery module or the number of battery modules in a battery pack may be variously determined depending on the output or capacity of the battery pack required for the electric vehicle.

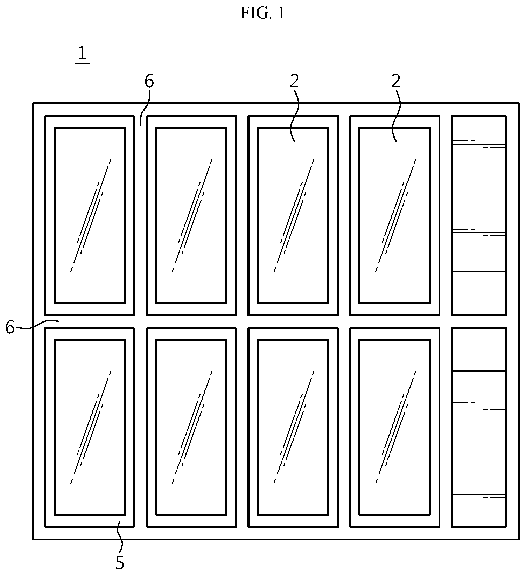

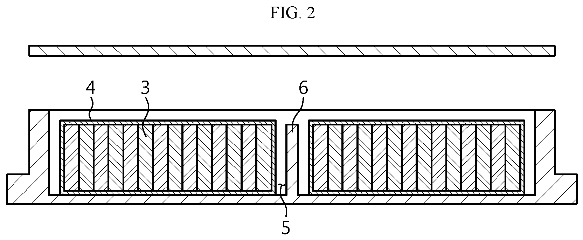

Meanwhile, in an example, the battery modules 2 of the battery pack 1 for the electric vehicle includes battery cells 3, a busbar frame (not shown) electrically connecting the battery cells and a module housing 4 accommodating all the battery cells and the busbar frame. The battery modules may be placed in an internal space 5 of a pack tray and secured to the bottom of the pack tray by bolts as shown in FIGS. 1 and 2. In general, the pack tray may include a plurality of beam frames 6 to enhance durability against impact or vibration. The beam frame may be extended from one wall of the pack tray and coupled to the other wall and configured to suppress distortion or deformation of the pack tray. The internal space of the pack tray may be divided by the beam frames, and each of the battery modules may be disposed in each of the divided spaces.

However, in the case of the battery pack including the battery modules mounted in the pack tray, a dead space corresponding to the gap between the battery module and the beam frame and the weight and volume occupied by the module housing are regarded as factors that reduce the energy density per unit volume of the battery pack and make it difficult to dramatically increase the energy capacity of the battery pack. In recent years, however, with the fast growth of electric vehicle markets, the movement distance of electric vehicles is important. The movement distance of electric vehicles greatly relies on the energy capacity of battery packs. Accordingly, an approach to increase the energy density per unit volume of battery packs is still a big issue in the corresponding industrial field. More recently, attention is directed to a so-called cell to pack type battery pack in which the module housing is omitted and the battery cells are directly mounted in the pack tray, that is, the battery module manufacturing step is omitted and the battery cells are directly mounted in the pack tray.

However, since cell to pack does not use the module housing, it is necessary to mount and secure the battery cells in the battery pack in a completely different way. Further, it is necessary to confine the battery cells to prevent them from moving in the presence of external impact or vibration and suppress swelling of the battery cells during charging and discharging. Accordingly, there is a need for cell to pack type battery packs for ensuring structural stability of the battery cells against impact or vibration and suppressing swelling of the battery cells.

US 2019 / 326 569 A1 describes a battery pack comprising a unit battery module, including a module housing forming an inner space and a plurality of battery cells accommodated in the inner space, and a stacking frame for stacking the pouch-type secondary batteries. The stacking frame serving as a means for stacking the secondary batteries prevents the secondary batteries from moving by holding them and is configured to be stacked on one another to guide the assembling of the secondary batteries. A right side plate of the module housing of one unit battery module may be placed on a corresponding left side plate of the module housing of another unit battery module such that first coupling blind holes and second coupling blind holes of the respective side plates are matched with each other in an upper and lower direction. In this state, a coupling member, such as a long bolt of a tray, may be inserted into the first coupling holes and the second coupling holes to assemble the first unit battery module and the second unit battery module into a single body, thereby holding the side plates and their unit battery modules in a right position.

### DISCLOSURE

### Technical Problem

The present disclosure is directed to providing a cell to pack type battery pack that is easy to receive battery cells in a pack case and has structural stability against vibration and impact by confining the battery cells.

The technical problem to be solved by the present disclosure is not limited to the above-described problems, and these and other problems will be clearly understood by those skilled in the art from the following description.

### Technical Solution

According to an aspect of the present disclosure, there is provided a battery pack including a cell unit group including a plurality of cell units stacked and arranged in a direction; a compression pad attached to one side or both sides of each of the cell units; and a pair of surface pressure providing walls configured to integrally compress the cell units and the compression pads with the cell units and the compression pads interposed therebetween; and a pack case accommodating the cell unit group, wherein the surface pressure providing wall has a pin insertion portion at a lower end, the pin insertion portion being curved upwards from a lower surface, and wherein the pack case includes a guide pin which protrudes at a preset location of a bottom plate, and is inserted into the pin insertion portion and configured to guide the surface pressure providing wall to a right position.

The pack case may include a pack tray including the bottom plate and a plurality of beam frames disposed perpendicular to the bottom plate to form a wall, the cell unit group may be seated on the pack tray while the compression pads are in a compressed state, and one of the pair of surface pressure providing walls may be configured to face one of two opposite beam frames, and the other one of the pair of surface pressure providing walls may be configured to face the other one of the two opposite beam frames.

Each of the two opposite beam frames may be configured to support the surface pressure providing wall so that a reaction force against a restoring force of the compression pads acts on the surface pressure providing wall.

The guide pin may be spaced a predetermined distance apart from the beam frame and parallel to the beam frame.

The guide pin may be provided with a width smaller than the pin insertion portion and may be configured to be relatively movable in a widthwise direction within the pin insertion portion.

The guide pin may have a longitudinal cross section of a trapezoidal shape with a narrower top and a wider bottom.

The guide pin may have a longitudinal cross section of an arc shape, and a surface facing the cell units may be perpendicular to the bottom plate.

The surface pressure providing wall may include a ball member slidably coupled at the lower end.

The cell unit group may be seated between the two opposite beam frames in the bottom plate while the compression pads are in the compressed state, and the compressed state of the compression pads is relieved so that the surface pressure providing wall is pushed and brought into contact with the beam frames.

The guide pin may be integrally formed with the bottom plate.

The pin insertion portion may include a cushioning pad attached to an inner surface.

The cell unit may include a cell stack including one battery cell or two or more battery cells stacked; and a cell cover provided to cover both sides of the cell stack in a widthwise direction of the cell stack and a top of the cell stack.

The battery cell may be a pouch type battery cell.

The bottom plate may include a cooling channel in which a cooling medium flows inside thereof.

According to another aspect of the present disclosure, there is provided a vehicle including the above-described battery pack.

### Advantageous Effects

According to the present disclosure, it may be possible to provide the cell to pack type battery pack that is easy to receive the battery cells in the pack case, has structural stability against vibration and impact by confining the battery cells, and suppresses swelling of the battery cells during charging and discharging, thereby preventing performance degradation of the battery cells.

Additionally, the battery pack according to the present disclosure may have higher energy capacity than the conventional battery pack since the battery cells may be densely populated in the pack case.

The present disclosure may have many other effects, and such effects will be described in each embodiment, or description of effects that can be easily inferred by those skilled in the art is omitted.

### DESCRIPTION OF DRAWINGS

FIG. 1 is a diagram schematically showing a configuration of a conventional battery pack.
FIG. 2 is a schematic cross-sectional view of the battery pack of FIG. 1.
FIG. 3 is a perspective view schematically showing a configuration of a battery pack according to an embodiment of the present disclosure.
FIG. 4 is a diagram schematically showing a cell unit group according to an embodiment of the present disclosure.
FIG. 5 is a perspective view of a cell unit according to an embodiment of the present disclosure.
FIG. 6 is an exploded perspective view of the cell unit of FIG. 5.
FIG. 7 is an enlarged view of a region inside of a pack tray according to an embodiment of the present disclosure in which a portion of a wall of the pack tray are omitted.
FIGS. 8 and 9 are diagrams showing a process of receiving a cell unit group in a pack case according to an embodiment of the present disclosure.
FIG. 10 is a diagram showing a variation of a guide pin in FIG. 9 according to an embodiment of the present disclosure.
FIG. 11 is a diagram showing a variation of a surface pressure providing wall in FIG. 9 according to an embodiment of the present disclosure.
FIG. 12 is a diagram schematically showing a vehicle according to an embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made at the time that the application was filed.

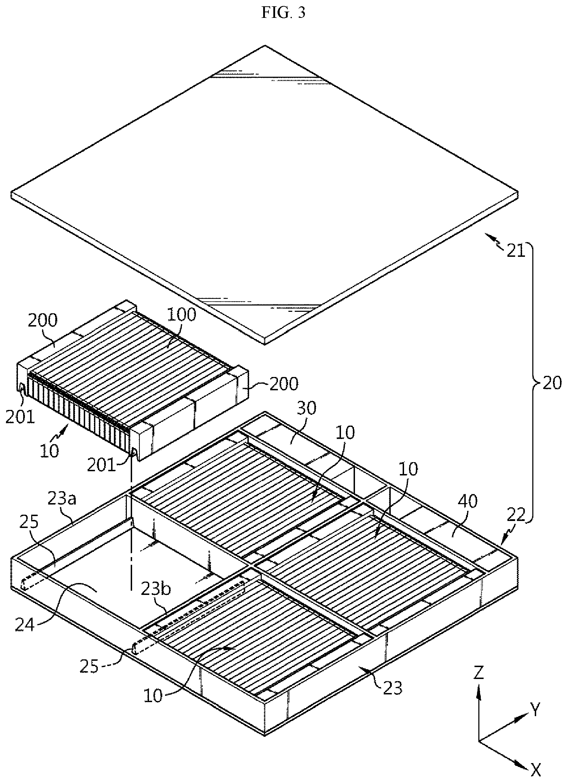

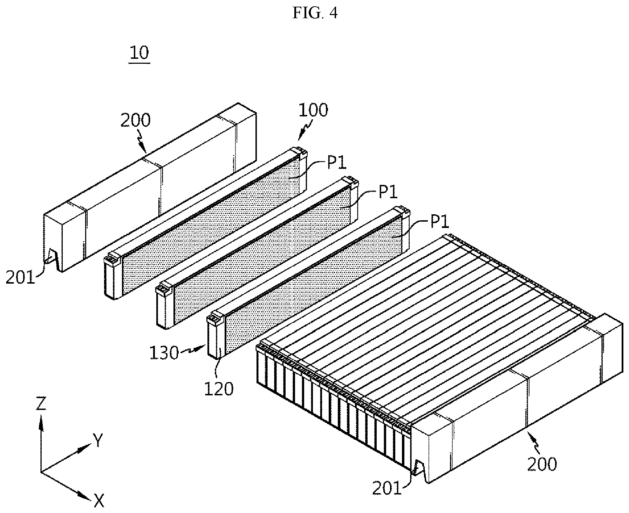

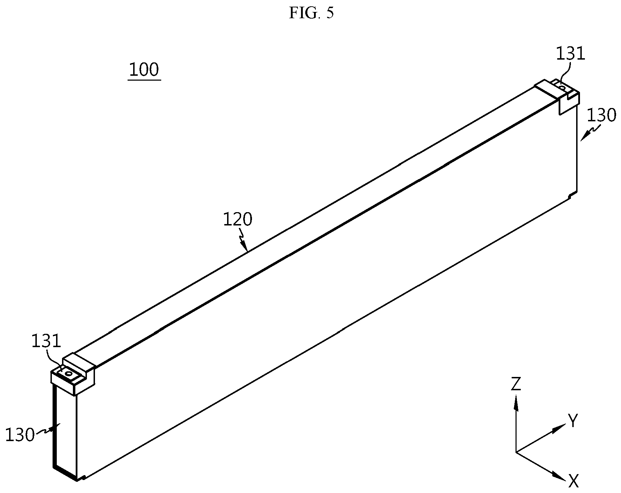

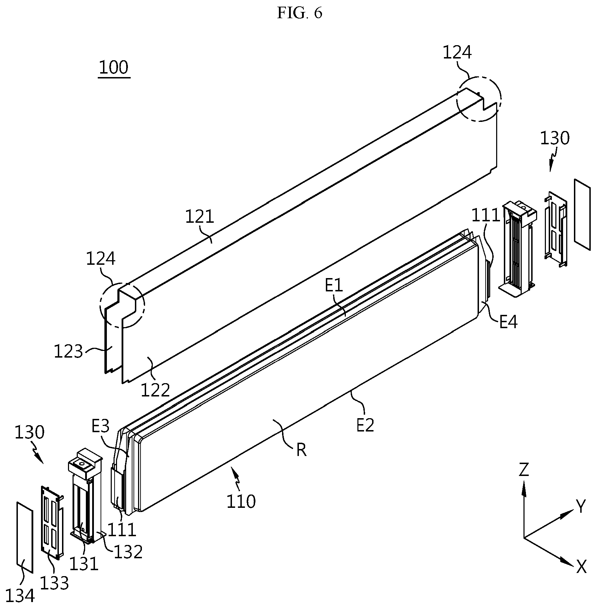

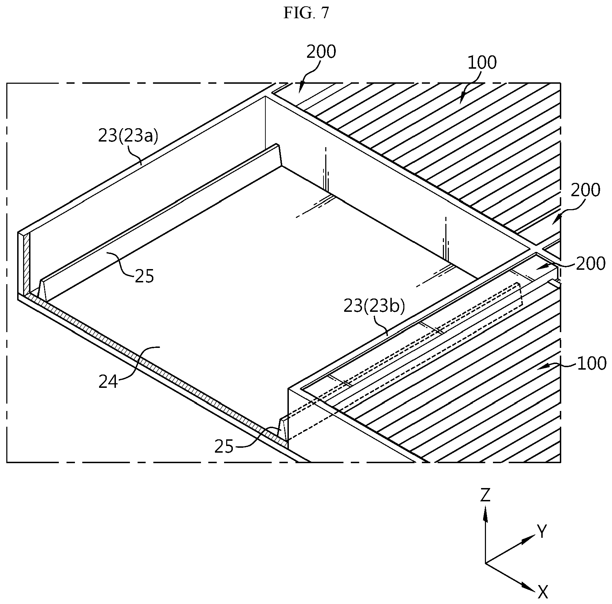

FIG. 3 is a perspective view schematically showing a configuration of a battery pack according to an embodiment of the present disclosure, FIG. 4 is a diagram schematically showing a cell unit group according to an embodiment of the present disclosure, FIG. 5 is a perspective view of a cell unit according to an embodiment of the present disclosure, FIG. 6 is an exploded perspective view of the cell unit of FIG. 5 and FIG. 7 is an enlarged view of a region inside of the pack tray according to an embodiment of the present disclosure in which a portion of a wall of the pack tray are omitted.

Referring to FIG. 3, the battery pack according to an embodiment of the present disclosure includes the cell unit group 10 and a pack case 20.

As shown in FIG. 4, the cell unit group 10 includes cell units 100 stacked and arranged in a direction, a compression pad P1 attached to one side or both sides of the cell unit 100 and a pair of surface pressure providing walls 200 disposed between the cell units 100 and the compression pads P1 to provide surface pressure to the cell units 100 and the compression pads P1.

The cell unit 100 may refer to an energy storage including one battery cell 110 or two or more stacked battery cells 110 and a cell cover 120 accommodating the at least one battery cell 110.

Specifically, referring to FIGS. 5 and 6, the cell unit 100 according to this embodiment includes a cell stack including at least one pouch type battery cell 110 stacked, and the cell cover 120 surrounding the remaining area of the cell stack except the bottom and the front and rear sides where electrode leads 111 are located. In other words, the cell cover 120 may be configured to cover both sides and the top of the cell stack in the widthwise direction (±X direction) of the cell stack. Additionally, the cell unit 100 includes a terminal busbar 131 electrically connected to the electrode leads 111 of the pouch type battery cells 110 and a busbar frame assembly 130 configured to support the terminal busbar 131 and covering a front open end and a rear open end of the cell cover 120. That is, the cell unit 100 of this embodiment has the busbar frame assembly 130 at each of the front side and the rear side. However, unlike this embodiment, the cell unit 100 may consist of the cell stack and the cell cover 120. In this case, the plurality of cell units 100 may be stacked in a direction, and the busbar frame assembly 130 may cover both the front side and the rear side of the plurality of cell units 100 stacked.

Referring back to FIG. 6, the pouch type battery cell 110 includes an electrode assembly, a pouch case accommodating the electrode assembly and the electrode lead 111 connected to the electrode assembly and extended from the pouch case. The electrode lead 111 includes a pair of positive and negative electrode leads. Here, the positive electrode lead and the negative electrode lead may be disposed at both ends of the battery cell 110 in the lengthwise direction (Y direction) of the battery cell 110.

A preset number of pouch type battery cells 110 may be stacked in a direction (X direction) with wide surfaces standing perpendicular to the ground. For example, as shown in FIG. 6, three pouch type battery cells 110 may be stacked in a direction (X direction). In this instance, the positive electrode lead of each pouch type battery cell 110 is disposed facing frontwards (-Y direction) and the negative electrode lead of each pouch type battery cell 110 is disposed facing rearwards (+Y direction). In this case, the three pouch type battery cells 110 may be connected in parallel to form a power bank by welding the electrode leads 111 of the same polarity to the terminal busbar 131 located at the corresponding side.

That is, the three pouch type battery cells 110 may be received in the cell cover 120 while being kept in the stacked state and may be connected in parallel through the medium of the terminal busbar 131 of the busbar frame assembly 130. Additionally, the terminal busbar 131 may have a top portion exposed to the outside of a busbar housing 132, and the top portion of the terminal busbar 131 may act as a positive terminal or a negative terminal of the cell unit 100.

Although this embodiment shows the cell unit 100 including the three pouch type battery cells 110, the cell unit 100 may include one, two or four or more pouch type battery cells 110. Although not shown, when six pouch type battery cells 110 are taken as an example, each three pouch type battery cells 110 may be connected in parallel, and two groups of three pouch type battery cells 110 connected in parallel may be connect in series, and the configuration of the six pouch type battery cells 110 is a so-called '3P2S'. In this case, the cell unit 100 may have the positive terminal and the negative terminal in the same direction.

Meanwhile, the pouch type battery cell 110 may include a receiving portion R where the electrode assembly is received in the pouch case, and four edge portions E1~E4 surrounding the receiving portion R. For example, as shown in FIG. 6, the four edge portions E1~E4 include the upper edge portion E1, the lower edge portion E2, the front edge portion E3 and the rear edge portion E4 on the basis of the receiving portion R in the pouch type battery cell 110 standing upright.

Here, all the edge portions E1~E4 may be a sealing portion or the remaining three edge portions E2,E3,E4 or E1,E3,E4 except the upper edge portion E1 or the lower edge portion E2 may be a sealing portion. In addition, when receiving the electrode assembly, the pouch type battery cell 110 using a method of folding a sheet of laminate film has three sealing portions, and the pouch type battery cell 110 using a method of joining the edges of two sheets of laminate films has four sealing portions. Accordingly, in the pouch type battery cell 110, three edge portions E2,E3,E4 or E1,E3,E4 may be a sealing portion or all four edge portions E1~E4 may be a sealing portion.

The cell cover 120 may be configured to cover at least a portion of the at least one pouch type battery cell 110 stacked. For example, the cell cover 120 configured to cover one pouch type battery cell 110 may be fabricated such that it covers the upper edge portion E1 of the corresponding pouch type battery cell 110 and both surfaces of the receiving portion R. Alternatively, as shown in FIG. 6, the cell cover 120 according to this embodiment may be fabricated such that it cover the upper edge portion E1 of the three pouch type battery cells 110, and one surface of the receiving portion R of the first pouch type battery cell 110 in the stacking order and one surface of the receiving portion R of the third pouch type battery cell 110.

The cell cover 120 may be made of a variety of materials. In particular, the cell cover 120 may be made of a metal to ensure the strength. The metal may keep the pouch type battery cells 110 in the stacked state more stably, and protect the pouch type battery cells 110 from external impact more safely. For example, the cell cover 120 may be formed from stainless steel (SUS) in whole or may be made of an alloy including stainless steel.

Since the pouch case is made of a soft material, the pouch type battery cells 110 are vulnerable to external impact and have low hardness. Accordingly, it is not easy to receive only the pouch type battery cell 110 in a pack case 20. Accordingly, the cell cover 120 is used, and the cell cover 120 stably keeps the pouch type battery cells 110 in the stacked state and standing state.

Additionally, the cell cover 120 may prevent damage or destruction of the pouch type battery cell 110 from external impact, and when the pouch type battery cells 110 are received in the pack case 20, may stably keep the pouch type battery cells 110 in the stacked state.

More specifically, describing the structure of the cell cover 120 according to this embodiment, the cell cover 120 includes an upper cover portion 121, a first side cover portion 122 and a second side cover portion 123 as shown in FIG. 6.

The upper cover portion 121 may be configured to cover the upper edge portion E1 of the pouch type battery cell 110 received inside. The upper cover portion 121 may contact the upper edge portion E1 of the pouch type battery cell 110 or may be spaced apart from the upper edge portion E1 of the pouch type battery cell 110.

The first side cover portion 122 may be extended in the downward direction from one edge line in the widthwise direction of the upper cover portion 121. For example, the first side cover portion 122 may be extended longer than the receiving portion R of the pouch type battery cell 110 in the downward direction from the left end of the upper cover portion 121.

The first side cover portion 122 may be configured to cover one side of the at least one pouch type battery cell 110. For example, the first side cover portion 122 may be configured to cover one surface of the receiving portion R of the first pouch type battery cell 110 in FIG. 6.

The second side cover portion 123 may be extended in the downward direction from the other edge line in the widthwise direction of the upper cover portion 121. For example, the second side cover portion 123 may be extended longer than the receiving portion R of the pouch type battery cell 110 in the downward direction from the right end of the upper cover portion 121.

The second side cover portion 123 may be configured to cover one side of the at least one pouch type battery cell 110. For example, the second side cover portion 123 may be configured to cover one surface of the receiving portion R of the third pouch type battery cell 110 in FIG. 6.

The distance between the first side cover portion 122 and the second side cover portion 123 may be determined in a range in which the pouch type battery cells 110 received in the cell cover 120 may be compressed.

By the configuration of the cell cover 120, the pouch type battery cells 110 may be compressed inside the cell cover 120 and the lower edge portion of the pouch type battery cells 110 is exposed. Accordingly, when the cell unit 100 is seated on a bottom plate 24 of the pack case 20, the lower edge portion of the pouch type battery cells 110 may come into direct contact with the bottom plate 24 of the pack case 20. In this case, heat may be transferred better between the lower edge portion of the pouch type battery cells 110 and the bottom plate 24 of the pack case 20. In addition, a thermally conductive adhesive G may be applied to the bottom plate 24 of the pack case 20 to enhance the heat transfer between the lower edge portion of the pouch type battery cells 110 and the bottom plate 24 of the pack case 20. That is, like this embodiment, by the exemplary configuration in which the bottom of the pouch type battery cells 110 is not covered using the cell cover 120, it may be possible to mount the pouch type battery cells 110 in the pack case 20 while stably keeping the pouch type battery cells 110 in the stacked state and cool the pouch type battery cells 110 smoothly and efficiently.

Additionally, the cell cover 120 may be open to the front and rear sides and the bottom. Additionally, the cell cover 120 of this embodiment may include a cut portion 124 at both top ends as shown in FIG. 6. Through the cut portions 124, as shown in FIG. 5, the busbar frame assembly 130 may be inserted in the inward direction of the cell cover 120, and the bent top end of the terminal busbar 131 may be exposed in the upward direction of the cell cover 120. As described above, since the electrode terminal of the cell unit 100 is configured to face upwards, it may be possible to increase the convenience of connection to the other cell unit 100 or an external device.

The busbar frame assembly 130 includes a first busbar frame assembly and a second busbar frame assembly. The first busbar frame assembly and the second busbar frame assembly may have substantially the same structure, and as shown in FIGS. 5 and 6, the first busbar frame assembly may be disposed at one end (-Y direction) in the lengthwise direction of the cell cover 120, and the second busbar frame assembly may be disposed at the other end (+Y direction) of the cell cover 120. As described above, in this embodiment, all the positive electrode leads of the three stacked pouch type battery cells 110 may be welded to the terminal busbar 131 of the first busbar frame assembly, and all the negative electrode leads may be welded to the terminal busbar 131 of the second busbar frame assembly. In this case, the three pouch type battery cells 110 may be connected in parallel in 3P1S configuration.

The busbar frame assembly 130 may include, as the main components, the terminal busbar 131, the busbar housing 132, a housing cover 133 and an insulation sheet 134 as shown in FIG. 6.

The terminal busbar 131 may be, for example, made of a metal such as copper, nickel and aluminum, and the busbar housing 132 may be, for example, made of an electrically insulating material such as plastics.

The busbar housing 132 may support the terminal busbar 131 and may be coupled to the cell cover 120. That is, the busbar housing 132 may be configured to be coupled to each of the front open end and the rear open end of the cell cover 120 as shown in FIG. 5. In this instance, the busbar housing 132 may be fixedly coupled to the cell cover 120 through a variety of coupling methods, for example, adhesion, welding, interference fitting, hooking, bolting, riveting.

The busbar housing 132 may be in the shape of a box of an approximately cubic structure. The busbar housing 132 may have a slit into which the electrode lead 111 is inserted, to allow the electrode lead 111 of the battery cell 110 to pass through the body. The electrode lead 111 of the battery cell 110 may be drawn out through the busbar housing 132 via the slit, and the drawn portion may be attached to the terminal busbar 131. When attaching the electrode lead 111 to the terminal busbar 131, laser welding may be performed. Additionally, the coupled part between the electrode lead 111 and the terminal busbar 131 may be covered with the housing cover 133. Additionally, the insulation sheet 134 may be attached to the outer side of the housing cover 133. The insulation sheet 134 may be, for example, made of a flame retardant material such as mica.

The cell unit 100 according to an embodiment of the present disclosure may be configured as described above, and a compression pad P1 may be attached to one side or both sides of the cell unit 100. The compression pad P1 may be made of a material that is compressed by an external force and returns to its original shape when the external force is removed. For example, the compression pad P1 may be made of rubber, silicone or a memory foam.

Referring back to FIG. 4, the cell units 100 to which the compression pad P1 is attached are stacked in contact with each other in a direction (X direction), and the surface pressure providing wall 200 is disposed on the outermost side of the stack of cell units 100. That is, the cell unit group 10 according to an embodiment of the present disclosure includes a plurality of cell units 100, a cushioning pad P2 disposed between the cell units 100, and the surface pressure providing wall 200 disposed on each of the both outermost sides in the stack direction of the cell units 100.

The surface pressure providing wall 200 may be the component that easily receives all the stacked cell units 100 in the pack case 20, and confines the cell units 100 to prevent them from moving after the cell units 100 are received in the pack case 20, thereby ensuring structural stability from vibration and impact.

For example, each one cell unit 100 may be received without using the surface pressure providing wall 200. However, in this case, it is ineffective due to the increased operation time. Additionally, the receiving portion R swells when the pouch type battery cell 110 is overcharged and overdischarged, and this is a factor that degrades the performance. The swelling may be suppressed or mitigated by compressing the pouch type battery cell 110 to the optimal pressure. However, when the cell units 100 is directly mounted in the pack case 20 without any compression device, it is difficult to suppress swelling of the battery cells 110, and in case where external impact or vibration is applied, the location of the battery cells 110 may be unstable, causing a problem with structural and electrical stability.

Accordingly, the battery pack according to the present disclosure is configured in a way that the cell unit group 10 includes a pair of surface pressure providing walls 200, and the entire cell unit group 10 is gripped using a robotic arm (not shown) or a gripping jig (not shown) and seated on the pack case 20, the pair of surface pressure providing walls 200 provide uniform surface pressure to the stacked battery cells 110. Hereinafter, the components of the present disclosure and their operation will be described in more detail.

Referring back to FIG. 3, the pack case 20 may include a pack tray 22 and a pack cover 21.

The pack tray 22 includes the bottom plate 24 and a plurality of beam frames 23 disposed perpendicular to the bottom plate 24 to form a wall. The plurality of beam frames 23 may include an outer beam frame 23a that forms a wall along the outer periphery of the bottom plate 24 and an inner beam frame 23b that divides the internal space of the pack tray 22 across the bottom plate 24 inside of the bottom plate 24.

Each cell unit group 10 may be seated in the divided internal space of the pack tray 22 surrounded by the plurality of beam frames 23. For example, as shown in FIG. 3, each cell unit group 10 may be seated in the internal space of the pack tray 22 surrounded by the outer beam frame 23a and the inner beam frame 23b of the pack tray 22. Although the pack tray 22 according to this embodiment is configured to receive four cell unit groups 10, the pack tray 22 may be configured to receive less than four cell unit groups 10 or four or more cell unit groups 10 by changing the area of the bottom plate 24 of the pack tray 22 or the number or location of the outer beam frame 23a and the inner beam frame 23b.

The cell unit group 10 may be seated on the pack tray 22 while the compression pads P1 are in the compressed state such that one of the pair of surface pressure providing walls 200 contacts one of the two opposite beam frames 23, and the other of the pair of surface pressure providing walls 200 contacts the other of the two opposite beam frames 23.

In this instance, the battery pack according to the present disclosure may be configured such that the pair of surface pressure providing walls 200 support in contact with the two opposite beam frames 23 respectively, so a reaction force to the restoring force of the compression pads P1 acts on the surface pressure providing wall 200.

It will be described in detail with reference to FIGS. 7 to 9 together with FIG. 3.

As shown in FIG. 3, the surface pressure providing wall 200 includes a pin insertion portion 201 at the lower end. The pin insertion portion 201 may be an empty space inside the surface pressure providing wall 200, curved upwards from the lower surface of the surface pressure providing wall 200. The pin insertion portion 201 may be extended along the lengthwise direction of the surface pressure providing wall 200.

Additionally, the pack case 20 may include a guide pin 25 that protrudes at a preset location of the bottom plate 24 and is inserted into the pin insertion portion 201 and configured to guide the surface pressure providing wall 200 to the right location.

The guide pin 25 may be integrally formed with the pack tray 22 and parallel to the beam frame 23, and when the cell unit group 10 is seated on the pack tray 22, may be disposed at a location corresponding to the pin insertion portion 201 of the surface pressure providing wall 200 in the up-down direction.

More specifically, every two guide pins 25 may be disposed in the bottom plate 24 of the pack tray 22 for each divided internal space of the pack tray 22 on which each cell unit group 10 will be seated. In this embodiment, one of the two guide pins 25 may be spaced a predetermined distance apart from the outer beam frame 23a and the other one may be spaced a predetermined distance apart from the inner beam frame 23b. Here, the predetermined distance may be determined, taking into account the thickness of the surface pressure providing wall 200, the level of compression of the compression pads P1 or the like. However, the predetermined distance may be determined in a range that is smaller than the horizontal width (±X direction) of the pin insertion portion 201 of the surface pressure providing wall 200.

The guide pin 25 may have a length corresponding to the surface pressure providing wall 200, and its longitudinal cross section may have a trapezoidal shape with a narrower top and a wider bottom. In this case, in the process of seating the surface pressure providing wall 200 on the pack tray 22, the guide pin 25 may be easily inserted into the pin insertion portion 201 of the surface pressure providing wall 200. In this instance, when the pin insertion portion 201 also has a trapezoidal shape corresponding to the guide pin 25, insertion between the pin insertion portion 201 and the guide pin 25 may be made easier.

Additionally, the guide pin 25 may be provided with a width smaller than the pin insertion portion 201. In this case, when the cell unit group 10 is seated on the pack tray 22, the guide pin 25 may be inserted into the pin insertion portion 201 of the surface pressure providing wall 200 more easily, and after the guide pin 25 is inserted into the pin insertion portion 201, the guide pin 25 may be relatively movable in the widthwise direction within the pin insertion portion 201.

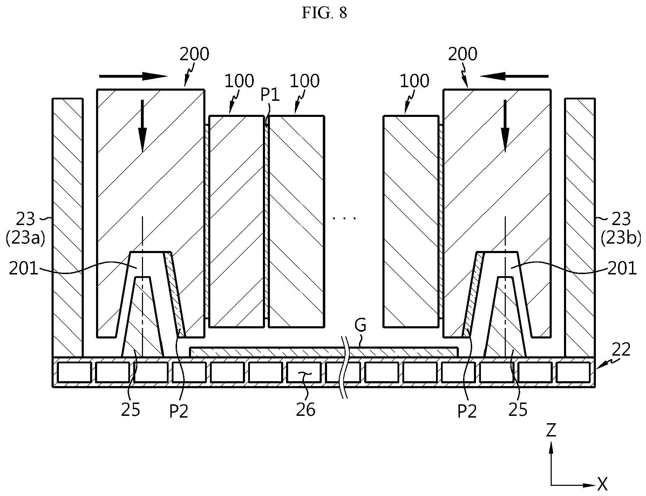

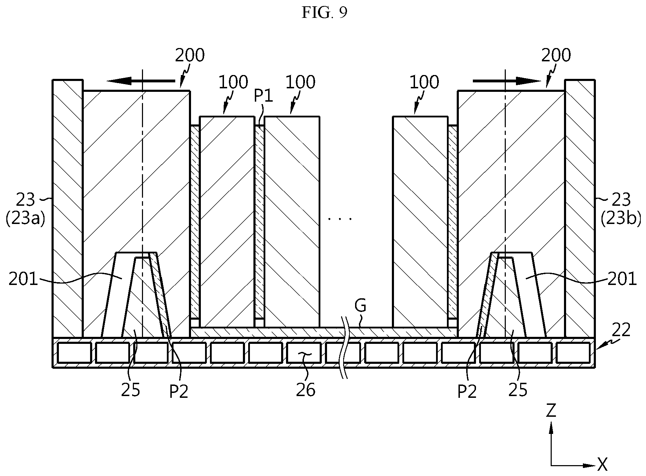

By the above-described configuration, as shown in FIG. 8, after the cell unit group 10 in the compressed state is seated on the pack tray 22 using the gripping jig (not shown), when the compression is removed, the surface pressure providing wall 200 may be pushed and moved in ±X direction as indicated by the arrow in FIG. 9 by the restoring force of the compression pads P1. That is, the cell unit group 10 according to this embodiment may be configured such that the compression pads P1 in the compressed state are seated between the two opposite beam frames 23 in the bottom plate 24, and as the compressed state of the compression pads P1 is relieved, the surface pressure providing wall 200 may be pushed in the direction in which the restoring force of the compression pads P1 acts or may contact the beam frame 23.

In addition, like the embodiment shown in FIG. 8, the cell unit group 10 may include the compression pads P1, and while it is in the compressed state, may be seated on the bottom plate 24 of the pack tray 22. In this instance, the location and interval of the two guide pins 25 present on the pack tray 22 may be the factor that determines the level of compression and loading position of the cell unit group 10. Additionally, since there is a gap between the beam frame 23 and the guide pin 25 of the pack tray 22 and the width of the guide pin 25 is smaller than the pin insertion portion 201 of the surface pressure providing wall 200, the cell unit group 10 may be seated on the bottom plate 24 of the pack tray 22 without contact between the inner surface of the pin insertion portion 201 of the surface pressure providing wall 200 and the guide pin 25. In this state, after the cell unit group 10 is seated on the pack tray 22, when the compression applied to the cell unit group 10 (by the gripping jig) is removed, the surface pressure providing wall 200 is pushed in a direction opposite the compression direction and moved toward the beam frame 23 by the action of the restoring force of the compression pads P1.

As shown in FIG. 9, the surface pressure providing wall 200 stops moving when it contacts the beam frame 23. In this instance, the movable distance of the surface pressure providing wall 200 may be limited within a width difference range between the guide pin 25 and the pin insertion portion 201. Additionally, the cushioning pad P2 may be attached to at least one of one surface of the guide pin 25 or one surface of the pin insertion portion 201 facing each other. The cushioning pad P2 may alleviate shocks caused by the contact between the guide pin 25 and the pin insertion portion 201, and may be compressed between the guide pin 25 and the inner surface of the pin insertion portion 201. Accordingly, an assembly clearance resulting from the relative position between the surface pressure providing wall 200, the beam frame 23 and the guide pin 25 may be eliminated by the compression of the cushioning pad P2.

According to an embodiment of the present disclosure, the two opposite beam frames 23 may support the pair of surface pressure providing walls 200 in contact therewith respectively, so the reaction force to the compression force of the compression pads P1 may be applied to the surface pressure providing wall 200.

Accordingly, the cell units 100 may be firmly held by the action of the reaction force of the surface pressure providing wall 200 on the cell units 100. Accordingly, each cell unit group 10 mounted in the pack tray 22 may be structurally stable against external impact or vibration. Additionally, when the battery cells 110 swell during charging and discharging, it may be possible to suppress or mitigate swelling of the battery cells 110 by the reaction force of the pair of surface pressure providing walls 200.

Meanwhile, referring back to FIGS. 8 and 9, the bottom plate 24 of the pack tray 22 may include a cooling channel 26 in which a cooling medium flows. The thermally conductive adhesive G may be applied to the bottom plate 24 and the cell units 100 may be disposed on the thermally conductive adhesive G, and thus it may be possible to transfer heat generated from the battery cells 110 to the bottom plate 24 of the pack tray 22 more effectively, thereby enhancing the cooling efficiency for the battery cells 110.

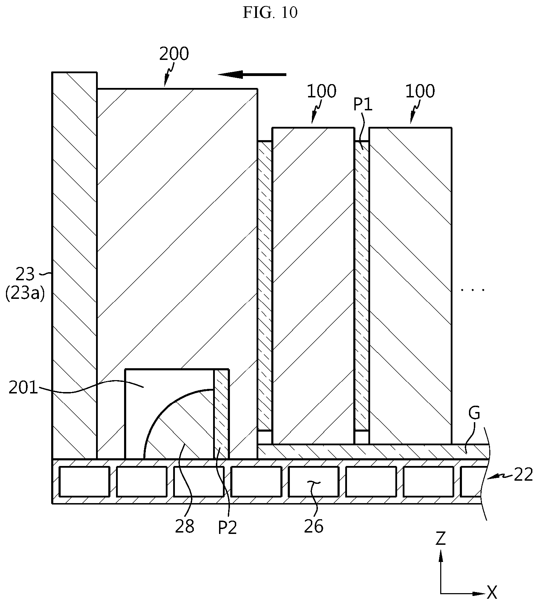

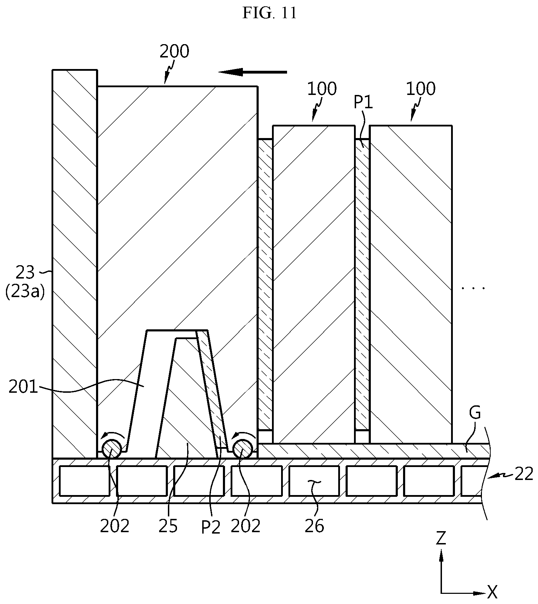

FIG. 10 is a diagram showing a variation of the guide pin 25 in FIG. 9 according to an embodiment of the present disclosure, and FIG. 11 is a diagram showing a variation of the surface pressure providing wall 200 in FIG. 9 according to an embodiment of the present disclosure.

Subsequently, the variations of the present disclosure will be briefly described with reference to FIGS. 10 and 11.

The same reference number as the above-described embodiment denotes the same element, and redundant description of the same element is omitted and difference(s) between this embodiment and the above-described embodiment will be described.

The guide pin 25 on the pack tray 22 is not necessarily limited to the trapezoidal shape as in the above-described embodiment. The guide pin 25 may be formed in any other shapes. For example, as shown in FIG. 10, a guide pin 28 may have a longitudinal cross section of an arc shape. More specifically, the guide pin 28 may have a cross section in the shape of an arc of 90° angle, and a surface facing the cell units 100 may be perpendicular to the bottom plate 24 of the pack tray 22. Additionally, the pin insertion portion 201 of the surface pressure providing wall 200 may have a rectangular internal space. In this case, when the surface pressure providing wall 200 is seated, its bottom may slide down along the arc part of the guide pin 25, and the vertical plane of the guide pin 28 and the inner surface of the pin insertion portion 201 contact each other in the horizontal direction, and thus the reaction force acting between the guide pin 28 and the inner surface of the pin insertion portion 201 may act in the horizontal direction more uniformly and stably.

Meanwhile, as shown in FIG. 11, the surface pressure providing wall 200 according to the variation may further include a ball member 202 slidably coupled at the lower end. As described above, after the cell unit group 10 is seated on the bottom plate 24 of the pack tray 22 while the compression pads P1 are in the compressed state, when the surface pressure providing wall 200 is pushed toward the beam frame 23 by the action of the restoring force of the compression pads P1, the surface pressure providing wall 200 according to this variation may move with little or no friction with the bottom plate 24 of the pack tray 22 by the rotation of the ball member 202. The ball member 202 may include, for example, a ball bearing.

By the configuration according to this variation, as friction between the bottom plate 24 of the pack tray 22 and the surface pressure providing wall 200 notably decreases, the surface pressure providing wall 200 may be supported by the beam frame 23 more firmly, and the reaction force of the surface pressure providing wall 200 may be applied to the cell units 100 without loss, thereby confining the cell units 100 more strongly.

Meanwhile, the battery pack may further include a control module 30. The control module 30 may include a Battery Management System (BMS) to manage the charge·discharge operation, State Of Charge (SOC) and State Of Health (SOH) of the battery cells 110 and may be mounted in the internal space of the pack case 20. Additionally, the battery pack may further include a switching unit 40. The switching unit 40 may be configured to control the electrical connection between the battery pack and an external circuit. To this end, the switching unit 40 may optionally include a current sensor, a power relay, a fuse or the like.

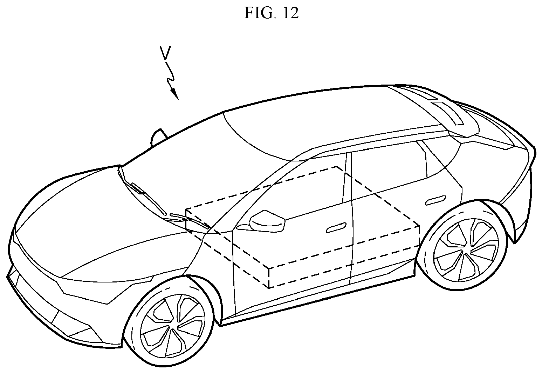

The battery pack according to the present disclosure may be used as an energy source for driving a vehicle. That is, the vehicle V according to the present disclosure may include the above-described battery pack according to the present disclosure as shown in FIG. 12. Here, the vehicle according to the present disclosure may include, for example, a predetermined vehicle that is powered by electricity such as an electric vehicle or a hybrid electric vehicle. Additionally, in addition to the battery pack according to the present disclosure, the vehicle according to the present disclosure may further include a variety of other components included in the vehicle, for example, a vehicle body or a motor.

## Claims

1. A battery pack, comprising:
a cell unit group (10) including a plurality of cell units (100) stacked and arranged in a direction;
a compression pad (P1) attached to one side or both sides of each of the cell units (100); and
a pair of surface pressure providing walls (200) configured to integrally compress the cell units (100) and the compression pads (P1) with the cell units (100) and the compression pads (P1) interposed therebetween; and
a pack case (20, 21, 22) accommodating the cell unit group (10),
wherein the surface pressure providing wall (200) has a pin insertion portion (201) at a lower end, the pin insertion portion (201) being curved upwards from a lower surface, and
wherein the pack case (20, 21, 22) includes a guide pin (25, 28) which protrudes from a bottom plate (22, 24), and is inserted into the pin insertion portion (201) and configured to guide the surface pressure providing wall (200) to a right position.

2. The battery pack according to claim 1, wherein the pack case (20, 21, 22) includes a pack tray (22) including the bottom plate (22, 24) and a plurality of beam frames (23, 23a, 23b) disposed perpendicular to the bottom plate (22, 24) to form a wall (200),
wherein the cell unit group (10) is seated on the pack tray (22) while the compression pads (P1) are in a compressed state, and
wherein one of the pair of surface pressure providing walls (200) faces one of two opposite beam frames (23, 23a, 23b), and the other one of the pair of surface pressure providing walls (200) faces the other one of the two opposite beam frames (23, 23a, 23b).

3. The battery pack according to claim 2, wherein each of the two opposite beam frames (23, 23a, 23b) is configured to support the surface pressure providing wall (200) so that a reaction force against a restoring force of the compression pads (P1) acts on the surface pressure providing wall (200).

4. The battery pack according to claim 2, wherein the guide pin (25, 28) is spaced a predetermined distance apart from the beam frame (23, 23a, 23b) and parallel to the beam frame (23, 23a, 23b).

5. The battery pack according to claim 1, wherein the guide pin (25, 28) is provided with a width smaller than the pin insertion portion (201) and is configured to be relatively movable in a widthwise direction within the pin insertion portion (201).

6. The battery pack according to claim 5, wherein the guide pin (25, 28) has a longitudinal cross section of a trapezoidal shape with a narrower top and a wider bottom.

7. The battery pack according to claim 5, wherein the guide pin (25, 28) has a longitudinal cross section of an arc shape, and a surface facing the cell units (100) is perpendicular to the bottom plate (22, 24).

8. The battery pack according to claim 5, wherein the surface pressure providing wall (200) includes a ball member (202) slidably coupled at the lower end.

9. The battery pack according to claim 2, wherein the cell unit group (10) is seated between the two opposite beam frames (23, 23a, 23b) in the bottom plate (22, 24) while the compression pads (P1) are in the compressed state, and the compressed state of the compression pads (P1) is relieved so that the surface pressure providing wall (200) is pushed and brought into contact with the beam frame (23, 23a, 23b).

10. The battery pack according to claim 1, wherein the guide pin (25, 28) is integrally formed with the bottom plate (22, 24).

11. The battery pack according to claim 1, wherein the pin insertion portion (201) includes a cushioning pad (P2) attached to an inner surface.

12. The battery pack according to claim 1, wherein the cell unit (100) includes:
a cell stack including one battery cell (110) or two or more battery cells (110) stacked; and
a cell cover (120) provided to cover both sides of the cell stack in a widthwise direction of the cell stack and a top of the cell stack.

13. The battery pack according to claim 12, wherein the battery cell (110) is a pouch type battery cell.

14. The battery pack according to claim 1, wherein the bottom plate (22, 24) includes a cooling channel (26) in which a cooling medium flows inside thereof.

15. A vehicle (V) comprising the battery pack according to any one of claims 1 to 14.

## Patentansprüche

1. Batteriepack aufweisend:
eine Zelleneinheitsgruppe (10) mit mehreren Zelleneinheiten (100), die in einer Richtung gestapelt und angeordnet sind;
ein Kompressionspad (P1), das an einer Seite oder beiden Seiten jeder der Zelleneinheiten (100) angebracht ist; und
zwei Oberflächendruckbereitstellungswände (200), die konfiguriert sind, um die Zelleneinheiten (100) und die Kompressionspads (P1) integral zu komprimieren, wobei die Zelleneinheiten (100) und die Kompressionspads (P1) dazwischen angeordnet sind; und
ein Packgehäuse (20, 21, 22), das die Zelleneinheitsgruppe (10) aufnimmt,
wobei die Oberflächendruckbereitstellungswände (200) jeweils einen Stifteinführabschnitt (201) an einem unteren Ende aufweisen, wobei der Stifteinführabschnitt (201) von einer unteren Oberfläche nach oben gekrümmt ist, und
wobei das Packgehäuse (20, 21, 22) einen Führungsstift (25, 28) aufweist, der von einer Bodenplatte (22, 24) vorsteht und in den Stifteinführabschnitt (201) eingeführt ist und konfiguriert ist, um die Oberflächendruckbereitstellungswand (200) zu einer rechten Position zu führen.

2. Batteriepack nach Anspruch 1, wobei das Packgehäuse (20, 21, 22) einen Packträger (22) aufweist, der die Bodenplatte (22, 24) und mehrere Trägerrahmen (23, 23a, 23b) aufweist, die senkrecht zu der Bodenplatte (22, 24) angeordnet sind und dadurch eine Wand (200) bilden,
wobei die Zelleneinheitsgruppe (10) auf dem Packträger (22) sitzt, während sich die Kompressionspads (P1) in einem komprimierten Zustand befinden, und
wobei eine der beiden Oberflächendruckbereitstellungswände (200) einem von zwei gegenüberliegenden Trägerrahmen (23, 23a, 23b) zugewandt ist und die andere der beiden Oberflächendruckbereitstellungswände (200) dem anderen der beiden gegenüberliegenden Trägerrahmen (23, 23a, 23b) zugewandt ist.

3. Batteriepack nach Anspruch 2, wobei jeder der beiden gegenüberliegenden Trägerrahmen (23, 23a, 23b) konfiguriert ist, um die Oberflächendruckbereitstellungswand (200) zu stützen, so dass eine Reaktionskraft gegen eine Rückstellkraft der Kompressionspads (P1) auf die Oberflächendruckbereitstellungswand (200) wirkt.

4. Batteriepack nach Anspruch 2, wobei der Führungsstift (25, 28) in einem vorbestimmten Abstand von dem Trägerrahmen (23, 23a, 23b) und parallel zu dem Trägerrahmen (23, 23a, 23b) beabstandet ist.

5. Batteriepack nach Anspruch 1, wobei der Führungsstift (25, 28) mit einer Breite bereitgestellt ist, die kleiner als der Stifteinführabschnitt (201) ist, und konfiguriert ist, um in einer Breitenrichtung innerhalb des Stifteinführabschnitts (201) relativ beweglich zu sein.

6. Batteriepack nach Anspruch 5, wobei der Führungsstift (25, 28) einen Längsquerschnitt einer Trapezform mit einer schmaleren Oberseite und einer breiteren Unterseite aufweist.

7. Batteriepack nach Anspruch 5, wobei der Führungsstift (25, 28) einen Längsquerschnitt einer Bogenform aufweist und eine Oberfläche, die den Zelleneinheiten (100) zugewandt ist, senkrecht zu der Bodenplatte (22, 24) ist.

8. Batteriepack nach Anspruch 5, wobei die Oberflächendruckbereitstellungswand (200) ein Kugelelement (202) aufweist, das an dem unteren Ende verschiebbar gekoppelt ist.

9. Batteriepack nach Anspruch 2, wobei die Zelleneinheitsgruppe (10) zwischen den beiden gegenüberliegenden Trägerrahmen (23, 23a, 23b) in der Bodenplatte (22, 24) sitzt, während sich die Kompressionspads (P1) in dem komprimierten Zustand befinden, und der komprimierte Zustand der Kompressionspads (P1) gelöst wird, so dass die Oberflächendruckbereitstellungswand (200) geschoben und in Kontakt mit dem Trägerrahmen (23, 23a, 23b) gebracht wird.

10. Batteriepack nach Anspruch 1, wobei der Führungsstift (25, 28) integral mit der Bodenplatte (22, 24) ausgebildet ist.

11. Batteriepack nach Anspruch 1, wobei der Stifteinführabschnitt (201) ein Dämpfungspad (P2) aufweist, das an einer inneren Oberfläche angebracht ist.

12. Batteriepack nach Anspruch 1, wobei die Zelleneinheit (100) aufweist:
einen Zellenstapel mit einer Batteriezelle (110) oder zwei oder mehr Batteriezellen (110), die gestapelt sind; und
eine Zellenabdeckung (120), die so bereitgestellt ist, dass sie beide Seiten des Zellenstapels in einer Breitenrichtung des Zellenstapels und eine Oberseite des Zellenstapels abdeckt.

13. Batteriepack nach Anspruch 12, wobei die Batteriezelle (110) eine Pouch-Batteriezelle ist.

14. Batteriepack nach Anspruch 1, wobei die Bodenplatte (22, 24) einen Kühlkanal (26) aufweist, in dem ein Kühlmedium darin strömt.

15. Fahrzeug (V) aufweisend den Batteriepack nach einem der Ansprüche 1 bis 14.

## Revendications

1. Bloc-batterie, comprenant:
un groupe d'unités cellulaires (10) comprenant une pluralité d'unités cellulaires (100) empilées et agencées dans une direction ;
un tampon de compression (P1) fixé sur un côté, ou les deux, de chacune des unités cellulaires (100) ; et
une paire de parois exerçant une pression de surface (200) configurées pour comprimer intégralement les unités cellulaires (100) et les tampons de compression (P1), les unités cellulaires (100) et les tampons de compression (P1) étant intercalées entre elles ; et
un boîtier de bloc (20, 21, 22) contenant le groupe d'unités cellulaires (10),
la paroi exerçant une pression de surface (200) possédant une partie d'insertion de broche (201) sur une extrémité inférieure, la partie d'insertion de broche (201) étant recourbée vers le haut depuis une surface inférieure, et
le boîtier de bloc (20, 21, 22) comprenant une broche de guidage (25, 28) dépassant d'une plaque inférieure (22, 24), et étant insérée dans la partie d'insertion de broche (201) et configurée pour guider la paroi exerçant une pression de surface (200) vers une bonne position.

2. Bloc-batterie selon la revendication 1, où le boîtier de bloc (20, 21, 22) comprenant un tiroir de bloc (22) comprenant la plaque inférieure (22, 24) et une pluralité de cadres de traverses (23, 23a, 23b) disposés perpendiculairement à la plaque inférieure (22, 24) pour former une paroi (200),
le groupe d'unité cellulaire (10) étant installé sur le tiroir de bloc (22) tant que les tampons de compression (P1) se trouvent à l'état comprimé, et
une de la paire de parois exerçant une pression de surface (200) faisant face à l'un des deux cadres de traverses opposés (23, 23a, 23b), l'autre de la paire de parois exerçant une pression de surface (200) faisant face à l'autre des deux cadres de traverses opposées (23, 23a, 23b).

3. Bloc-batterie selon la revendication 2, chacun des deux cadres de traverses opposés (23, 23a, 23b) étant configuré pour supporter la paroi de pression de surface (200), de sorte qu'une force de réaction contre une force de restauration des tampons de compression (P1) agisse sur la paroi exerçant une pression de surface (200).

4. Bloc-batterie selon la revendication 2, la broche de guidage (25, 28) étant espacée d'une distance prédéterminée du cadre de traverse (23, 23a, 23b), et parallèle au cadre de traverse (23, 23a, 23b).

5. Bloc-batterie selon la revendication 1, la broche de guidage (25, 28) étant dotée d'une largeur inférieure à la partie d'insertion de la broche (201), et étant configurée pour être relativement mobile dans le sens de la largeur au sein de la partie d'insertion de la broche (201).

6. Bloc-batterie selon la revendication 5, où la broche de guidage (25, 28) présentant un profil longitudinal de forme trapézoïdale avec une partie supérieure plus étroite et une partie inférieure plus large.

7. Bloc-batterie selon la revendication 5, la broche de guidage (25, 28) possédant un profil longitudinal de forme arquée, et une surface faisant face aux unités cellulaires (100) perpendiculaire à la plaque inférieure (22, 24).

8. Bloc-batterie selon la revendication 5, où la paroi exerçant une pression de surface (200) comprenant un élément à bille (202) couplé coulissant à l'extrémité inférieure.

9. Bloc-batterie selon la revendication 2, le groupe d''unités cellulaires (10) étant installé entre les deux cadres de traverse opposés (23, 23a, 23b) dans la plaque inférieure (22, 24) tant que les tampons de compression (P1) se trouvent à l'état comprimé, et l'état comprimé des tampons de compression (P1) étant relâché afin que la paroi exerçant une pression de surface (200) soit poussée et amenée au contact du cadre de traverse (23, 23a, 23b).

10. Bloc-batterie selon la revendication 1, la broche de guidage (25, 28) étant réalisée de façon intégrante avec la plaque inférieure (22, 24).

11. Bloc-batterie selon la revendication 1, la partie d'insertion de la broche (201) comprenant un coussin amortisseur (P2) fixé sur une surface intérieure.

12. Bloc-batterie selon la revendication 1, l'unité cellulaire (100) comprenant :
un empilement de cellules comprenant une cellule de batterie (110), ou deux ou plusieurs cellules de batterie (110) empilées ; et
un couvercle de cellules (120) agencé pour couvrir les deux côtés de l'empilement de cellules dans le sens de la largeur de l'empilement de cellules et une partie supérieure de l'empilement de cellules.

13. Bloc-batterie selon la revendication 12, où la cellule de batterie (110) étant une cellule de batterie du type poche.

14. Bloc-batterie selon la revendication 1, où la plaque inférieure (22, 24) comprenant un conduit de refroidissement (26) à l'intérieur duquel circule un agent réfrigérant.

15. Véhicule (V) comprenant le bloc-batterie selon une quelconque des revendications 1 à 14.
